# EUROPÄISCHE PATENTSCHRIFT

(11) **EP 2 930 154 B1**
(45) Veröffentlichungstag und Bekanntmachung des Hinweises auf die Patenterteilung: **20.02.2019**
(21) Anmeldenummer: 15000646.8
(22) Anmeldetag: 05.03.2015
(51) Int. Cl.: C03B 9/195, C03B 9/193, C03B 11/02, C03B 11/10

(54) **VORRICHTUNG ZUM PRESSEN UND ABLEGEN VON GLASVORFORMLINGEN**
DEVICE FOR PRESSING AND DEPOSITING OF GLASS PRE-FORMS
DISPOSITIF DE PRESSAGE ET D'APPLICATION DE PRÉFORMES EN VERRE

(30) Priorität: 09.04.2014 DE 102014005279
(43) Veröffentlichungstag der Anmeldung: 14.10.2015
(73) Patentinhaber: Zwiesel Kristallglas AG, 94227 Zwiesel (DE)
(72) Erfinder: Röck, Gerhard, 94227 Zwiesel (DE); Lesche, Klaus, 94259 Kirchberg (DE)
(74) Vertreter: Müller-Boré & Partner Patentanwälte PartG mbB

(56) Entgegenhaltungen:
- US-A- 1 532 163
- US-A- 1 888 318
- US-A- 3 834 884
- US-A- 4 432 783

## Beschreibung

Die vorliegende Erfindung betrifft eine Vorrichtung und ein Verfahren zum Pressen von Glasvorformlingen und Ablegen der Glasvorformlinge in eine Blasmaschine, sowie eine Blasmaschine mit einer derartigen Vorrichtung.

Bei der Herstellung von Glasgefäßen, wie z.B. Trinkgläsern, werden häufig Rotationsblasmaschinen eingesetzt, bei denen eine Vielzahl von Blasformen mit zugeordneten Arbeitstischen und Blasköpfen karussellartig um den Blasmaschinekörper rotiert werden. Zum Blasen der Glasgefäße wird jeweils ein Vorformling aus flüssigem Glas auf einen sich rotierenden Arbeitstisch abgelegt, woraufhin der zugeordnete Blaskopf abgesenkt und luftdicht abschließend an dem Vorformling angeordnet wird, um den Vorformling in der zugeordneten Blasform auszublasen.

Zur Bereitstellung des Glasvorformlings wird zunächst ein flüssiger Glastropfen, auch Glasposten genannt, aus einer Glasschmelze entnommen, und daraufhin in einer Pressform zu dem Glasvorformling gepresst. Anschließend wird der Glasvorformling mittels eines Ablegemechanismus in die Blasmaschine, insbesondere auf einem der Arbeitstische davon, abgelegt. Dieser Vorgang muss automatisiert und bei hohen Taktraten ablaufen, um eine möglichst hohe Produktivität zu gewährleisten.

US 1 888 318 A offenbart eine Blasmaschinenanlage, bei welcher zwei Glaspostenaufnahmen von zwei Glasposten-Spendern simultan jeweils einen Glasposten aufnehmen, wobei die Glasposten dann an zwei separat angeordnete Blasmaschinen übergeben werden. Die Glasposten werden in den Glaspostenaufnahmen mittels eines zugeordneten Stempels vorgeformt, wobei die Glaspostenaufnahmen kontinuierlich in eine Richtung rotieren.

US 3 834 884 A offenbart eine Blasmaschinenanlage, in welcher die Glaspostenaufnahmen kontinuierlich in einem ersten Formgebungsabschnitt rotieren, wobei die Glasposten nach dem Vorformen im ersten Formgebungsabschnitt samt der Glasposten-Halteeinheit mittels zweier separat angeordneter Übergabevorrichtungen an den zweiten Formgebungsabschnitt übergeben werden.

US 4 432 783 A offenbart eine Vorrichtung, bei welcher in einem Karussell sowohl das Vorformen als auch das endgültige Ausformen eines Glasprodukts durchgeführt werden. Die Vorrichtung weist zwei nebeneinander angeordnete Glasposten-Spender sowie rotierbar angeordnete Glaspostenaufnahmen auf, welche jeweils zwei nebeneinander angeordnete Vorformen aufweisen, welche jeweils einen Glasposten von den Glasposten-Spendern aufnehmen.

Es ist daher Aufgabe der vorliegenden Erfindung, einen hohen Durchsatz beim Pressen von Glasvorformlingen und Ablegen der Glasvorformlinge in eine Blasmaschine zu erzielen.

Diese Aufgabe wird durch den Gegenstand der unabhängigen Ansprüche gelöst. Bevorzugte Ausführungsformen ergeben sich aus den abhängigen Ansprüchen.

Gemäß eines Aspekts der Erfindung wird eine Vorrichtung zum Pressen von Glasvorformlingen und Ablegen der Glasvorformlinge in eine Blasmaschine bereitgestellt, aufweisend: einen ersten Stempel, welcher zwischen einem Glaspostenaufnahmebereich und einem ersten Vorformling-Pressbereich hin und her bewegbar ist; einen zweiten Stempel, welcher zwischen dem Glaspostenaufnahmebereich und einem zweiten Vorformling-Pressbereich hin und her bewegbar ist; eine erste Pressform, die dem ersten Stempel zugeordnet ist und zwischen dem ersten Vorformling-Pressbereich und einem Vorformling-Ablegebereich hin und her bewegbar ist; eine zweite Pressform, die dem zweiten Stempel zugeordnet ist und zwischen dem zweiten Vorformling-Pressbereich und dem Vorformling-Ablegebereich hin und her bewegbar ist; wobei die jeweiligen Stempel mit den jeweiligen zugeordneten Pressformen in den jeweiligen Vorformling-Pressbereichen derart zusammenwirken können, dass ein im Glaspostenaufnahmebereich von einem der jeweiligen Stempel aufgenommener Glasposten zu einem Glasvorformling umgeformt wird und von der zugeordneten Pressform aufgenommen wird; wobei die Vorrichtung derart konfiguriert ist, dass nach dem Zusammenwirken des jeweiligen Stempels mit der zugeordneten Pressform der jeweilige Stempel zurück zum Glaspostenaufnahmebereich bewegt wird, während die jeweilige Pressform zum Vorformling-Ablegebereich bewegt wird, um dort den Glasvorformling in die Blasmaschine abzulegen.

Die Glasvorformlinge sind Vorformlinge aus flüssigem Glas und weisen eine im Wesentlichen vordefinierte Form auf, welche es ermöglicht, dass der Glasvorformling in der Blasmaschine weiterverarbeitet werden kann, insbesondere ausgeblasen werden kann. Die Glasvorformlinge werden auch als "Pastille" bezeichnet. Die Glasvorformlinge können bereits kelchförmig ausgebildet sein. Vorteilhaft ist jedoch eine Ausführung als Glastablette, da hierbei zur Ausbildung der Tablettenform geringere Umformungen des Glaspostens nötig sind, was zu geringeren Wärmeverlusten des flüssigen Glases und damit zu besseren Oberflächenqualitäten des aufgeblasenen Produkts führt. Die Glastablette kann auf einer Seite, die in der Blasmaschine dem Blaskopf abgewandt ist, eine Erhebung bzw. einen Zipfel aufweisen, welcher am fertig geblasenen Glasprodukt als Ansatz für einen Stiel genutzt werden kann.

Mit Glasposten ist ein flüssiger Glastropfen gemeint. Dieser kann einer Glasschmelze entnommen werden, beispielsweise indem eine gewisse Menge flüssigen Glases aus einem Tropfenauslauf einer Schmelzwanne abgelassen wird, und mittels einer Schere am Tropfenauslauf abgetrennt wird.

Der Glaspostenaufnahmebereich stellt den Bereich dar, in welchem die Stempel den Glasposten aufnehmen können. Dies kann beispielsweise der Bereich direkt unter dem Tropfenauslauf der Schmelzwanne sein. Alternativ kann der Glaspostenaufnahmebereich der Bereich am Ende einer Glaspostenrutsche sein, welche sich von dem Bereich unter dem Tropfenauslauf erstreckt. Beim Aufnahmevorgang des Glaspostens fällt der Glasposten in einen dafür vorgesehenen Ausformungsabschnitt des (ersten oder zweiten) Stempels, wobei der Ausformungsabschnitt als eine Vertiefung ausgebildet sein kann. Nach Aufnahme des Glaspostens in dem Glaspostenaufnahmebereich ist der Glasposten in dem Stempel, insbesondere in dem Ausformungsabschnitt davon, angeordnet, wobei vorzugsweise die durch die Schere verursachten Schermarken am Glasposten seitlich nach außen gerichtet sind, wie später im Zusammenhang mit der Blasmaschine näher erläutert wird.

Der erste Stempel und der zweite Stempel sind jeweils zwischen dem Glaspostenaufnahmebereich und den jeweiligen Vorformling-Pressbereichen hin und her bewegbar. Diese Hin- und Herbewegung erfolgt vorzugsweise jeweils in einer horizontalen Ebene. Insbesondere können die Stempel jeweils um eine vertikale Achse schwenkbar angeordnet bzw. gelagert sein, um zwischen dem Glaspostenaufnahmebereich und den jeweiligen Vorformling-Pressbereichen hin und her bewegbar zu sein. Da im Glaspostenaufnahmebereich nur eines der Stempel zur selben Zeit zum Aufnehmen des Glaspostens angeordnet werden kann, werden die Stempel vorzugsweise abwechselnd in dem Glaspostenaufnahmebereich angeordnet, um abwechselnd einen Glasposten aufzunehmen. Die Bewegung eines Stempels von dem Glaspostenaufnahmebereich hin zum jeweiligen Vorformling-Pressbereich und die Bewegung des selben Stempels von dem Vorformling-Pressbereich zurück zum Glaspostenaufnahmebereich kann insbesondere entlang derselben Bewegungsbahn erfolgen. Der erste und der zweite Stempel können jeweils unabhängig von der Bewegung zwischen dem Glaspostenaufnahmebereich und den jeweiligen Vorformling-Pressbereichen ferner in einer vertikalen Richtung bewegbar sein.

Der Vorformling-Ablegebereich stellt den Bereich dar, in welchem die Pressformen den Glasvorformling in die Blasmaschine ablegen können. Die erfindungsgemäße Vorrichtung kann mit der Blasmaschine so abgestimmt werden, dass beim Zeitpunkt des Ablegens des Glasvorformlings in dem Vorformling-Ablegebereich durch die (erste oder zweite) Pressform ein aufnahmebereiter Arbeitstisch der Blasmaschine ebenfalls in dem Vorformling-Ablegebereich unter der Pressform angeordnet ist. Das Aufnehmen der Glasvorformlinge durch die Pressformen kann mittels anlegen eines Unterdrucks an der Pressform erfolgen. Beim Ablegen der Glasvorformlinge in die Blasmaschine, insbesondere auf einen Arbeitstisch davon, kann der Unterdruck aufgehoben werden und/oder der Glasvorformling kann mittels Druckluft von der Pressform gelöst werden. Die Pressformen können hierzu jeweils eine oder eine Vielzahl von Saug- und/oder Druckluftöffnung(en) aufweisen.

Die erste Pressform und die zweite Pressform sind zwischen den jeweiligen Vorformling-Pressbereichen und dem Vorformling-Ablegebereich hin und her bewegbar. Diese Hin- und Herbewegung erfolgt vorzugsweise jeweils in einer horizontalen Ebene. Insbesondere können die Pressformen jeweils um eine vertikale Achse schwenkbar angeordnet bzw. gelagert sein, um zwischen den jeweiligen Vorformling-Pressbereichen und dem Vorformling-Ablegebereich hin und her bewegbar zu sein. Da im Vorformling-Ablegebereich nur eines der Pressformen zur selben Zeit zum Ablegen des Vorformlings angeordnet werden kann, werden die Pressformen vorzugsweise abwechselnd in dem Vorformling-Ablegebereich angeordnet, um abwechselnd einen Vorformling abzulegen. Die Bewegung einer Pressform von dem jeweiligen Vorformling-Pressbereich zum Vorformling-Ablegebereich und die Bewegung der selben Pressform von dem Vorformling-Ablegebereich zurück zu dem jeweiligen Vorformling-Pressbereich kann insbesondere entlang derselben Bewegungsbahn erfolgen.

Die Vorformling-Pressbereiche liegen zwischen dem Glaspostenaufnahmebereich und dem Vorformling-Ablegebereich. In den jeweiligen Vorformling-Pressbereichen wirken die jeweiligen Stempel mit den jeweiligen zugeordneten Pressformen derart zusammen, dass ein von dem Stempel aufgenommener Glasposten zu einem Glasvorformling umgeformt wird. Das Zusammenwirken umfasst insbesondere eine Bewegung des (ersten oder zweiten) Stempels und/oder der zugeordneten Pressform aufeinander zu, so dass der Glasposten zwischen dem Stempel und der Pressform eingeklemmt wird und zu einem Glasvorformling gepresst wird. Vorzugsweise werden der Stempel und die Pressform in dem Vorformling-Pressbereich übereinander angeordnet und in vertikaler Richtung gegeneinander verfahren. Hierbei wird vorzugsweise der Stempel unter der Pressform angeordnet, und der Stempel wird relativ zur Pressform in vertikaler Richtung auf die Pressform zubewegt. Es ist jedoch auch denkbar, dass alternativ oder zusätzlich die Pressform relativ zum Stempel in vertikaler Richtung auf den Stempel zubewegt wird. Richtungs- und Positionsangaben, wie z.B. horizontal, vertikal, oben, unten, sind in der vorliegenden Beschreibung und in den Ansprüchen bezüglich einer aufgestellten, betriebsbereiten Vorrichtung zu verstehen. Der Vorformling-Pressbereich muss hierbei kein fixer Punkt in der horizontalen Bewegungsebene der jeweiligen Stempel und Pressformen sein. Vielmehr können die Stempel und die Pressformen während des Zusammenwirkens, insbesondere während des Ausbildens des Glasvorformlings, weiter in horizontaler Richtung bewegt werden, solange hierbei keine relative Bewegung zwischen dem Stempel und der zugeordneten Pressform in horizontaler Richtung entsteht. Vorteilhafterweise können hierdurch die Glasposten, während sie zum Glasvorformling umgeformt werden, weiter in Richtung des Vorformling-Ablegebereichs transportiert werden.

Nach dem Zusammenwirken des jeweiligen Stempels mit der zugeordneten Pressform wird der jeweilige Stempel zurück zum Glaspostenaufnahmebereich bewegt, während die jeweilige Pressform mit dem Glasvorformling weiter zum Vorformling-Ablegebereich bewegt wird, um den Glasvorformling in die Blasmaschine abzulegen. Der zum Glaspostenaufnahmebereich zurückbewegte Stempel kann dort erneut einen Glasposten aufnehmen, wobei währenddessen der andere Stempel von dem Glaspostenaufnahmebereich wegbewegt ist und im Vorformling-Pressbereich zusammen mit der ihr zugeordneten Pressform einen Glasvorformling ausbildet. So ermöglicht die erfindungsgemäße Vorrichtung einen Arbeitsablauf, bei dem die jeweiligen Stempel und Pressformen abwechselnd Glasposten aufnehmen, Glasvorformlinge pressen und die Glasvorformlinge in die Blasmaschine ablegen.

Im Folgenden wird die Hin- und Herbewegung der Stempel zwischen dem Glaspostenaufnahmebereich und den jeweiligen Vorformling-Pressbereichen sowie die Hin- und Herbewegung der Pressformen zwischen den jeweiligen Vorformling-Pressbereichen und dem Vorformling-Ablegebereichen teilweise als "Transportbewegung" bezeichnet, und die Richtung der Transportbewegung wird teilweise als "Transportrichtung" bezeichnet. Vorzugsweise ist die Transportrichtung eine horizontale Richtung. Andererseits wird die Bewegung des Stempels und/oder der Pressform zueinander zum Pressen des Vorformlings beim Zusammenwirken teilweise als "Pressbewegung" bezeichnet, und die Richtung der Pressbewegung wird teilweise als "Pressrichtung" bezeichnet. Vorzugsweise ist die Pressrichtung eine vertikale Richtung.

Die erfindungsgemäße Vorrichtung bringt die folgenden Vorteile mit sich: Durch das Vorsehen von zwei Stempeln, welche jeweils zwischen dem Glaspostenaufnahmebereich und einem Vorformling-Pressbereich hin und her bewegt werden können, kann die mögliche Glaspostenausgaberate am Tropfenauslauf (welche in der Regel höher ist als die Taktrate eines einzelnen Stempel-Pressform-Paars zum Pressen, Transportieren und Ablegen des Glasvorformlings) besser ausgenutzt werden, denn während ein Stempel-Pressform-Paar einen Glasvorformling presst, transportiert und ablegt, kann der Stempel des anderen Stempel-Pressform-Paars zurück zum Glaspostenaufnahmebereich bewegt werden und dort erneut einen Glasposten aufnehmen. Hierbei ist weiter vorteilhaft, dass ein Stempel lediglich zwischen dem Glaspostenaufnahmebereich und dem Vorformling-Pressbereich hin und her bewegt werden muss, so dass der Stempel bereits zurück zum Glaspostenaufnahmebereich zurück bewegt werden kann, während die zugeordnete Pressform den Glasvorformling weiter zum Vorformling-Ablegebereich transportiert. Insbesondere kann der Stempel bereits einen neuen Glasposten aufnehmen, während die dem Stempel zugeordnete Pressform den zuvor ausgebildeten Vorformling in die Blasmaschine ablegt. Ein weiterer Vorteil liegt darin, dass die Stempel nicht bis zum Vorformling-Ablegebereich, d.h. bis zur Blasmaschine, bewegt werden. Denn in der Regel weisen die Stempel eine große Bauhöhe auf, da sie die Aktorik zum Verfahren gegenüber der zugeordneten Pressform zum Pressen der Vorformlinge umfassen. Wenn die Stempel bis zum Vorformling-Ablegebereich bewegt werden, muss die Blasmaschine derart ausgelegt sein, dass kein Teil der Blasmaschine, insbesondere kein rotierender Teil der Blasmaschine, in Kontakt mit dem Stempel in dem Vorformling-Ablegebereich kommt. Dadurch, dass die Stempel sich lediglich bis zum Vorformling-Pressbereich bewegen, und nicht bis zum Vorformling-Ablegebereich, kann insbesondere eine Rotationsmaschine verwendet werden, welche jeweils unter den Arbeitstischen angeordnete Unterstützböden aufweist, welche in vertikaler Richtung zum Unterstützen des sich aufblasenden Glasprodukts verfahren werden können.

Der erste Stempel, der zweite Stempel, die erste Pressform und die zweite Pressform sind jeweils um eine gemeinsame vertikale Achse schwenkbar angeordnet.

Die schwenkbare Anordnung ermöglicht jeweils Bewegungen der jeweiligen Stempel zwischen dem Glaspostenaufnahmebereich und den jeweiligen Vorformling-Pressbereichen in einer horizontalen Ebene. Die schwenkbare Anordnung ermöglicht ferner jeweils Bewegungen der jeweiligen Pressformen zwischen den jeweiligen Vorformling-Pressbereichen und dem Vorformling-Ablegebereich in einer horizontalen Ebene. Die Stempel und die Pressformen können jeweils über Schwenkarme schwenkbar angeordnet sein, wobei die Schwenkarme um die gemeinsame vertikale Achse drehbar gelagert sind. Die Schwenkarme können alle im Wesentlichen die gleiche Länge aufweisen, und die Stempel und Pressformen können sich in der Draufsicht entlang einer gleichen Kreisbahn bewegen.

Vorteilhafterweise ermöglicht die schwenkbare Anordnung der Stempel und Pressformen um eine gemeinsame Ebene eine kompakte Bauweise der Vorrichtung sowie eine einfache Ausrichtung der Stempel und der zugeordneten Pressformen zueinander beim Zusammenwirken zum Umformen des Glaspostens.

Die Bewegung des ersten Stempels von dem Glaspostenaufnahmebereich zum ersten Vorformling-Pressbereich und die Bewegung des zweiten Stempels von dem Glaspostenaufnahmebereich zum zweiten Vorformling-Pressbereich verlaufen in entgegengesetzte Drehrichtungen.

Ebenso können die Bewegung der ersten Pressform von dem ersten Vorformling-Pressbereich zu dem Vorformling-Ablegebereich und die Bewegung der zweiten Pressform von dem zweiten Vorformling-Pressbereich zum Vorformling-Ablegebereich in entgegengesetzte Drehrichtungen verlaufen.

Vorteilhafterweise ermöglicht die Bewegung in entgegengesetzte Drehrichtungen, dass sich die Transportwege des ersten Stempel-Pressform-Paars und des zweiten Stempel-Pressform-Paars nicht kreuzen. Ferner kann der Platz zwischen dem Glaspostenaufnahmebereich und dem Vorformling-Ablegebereich optimal ausgenutzt werden.

Vorzugsweise sind der erste Stempel, der zweite Stempel, die erste Pressform und die zweite Pressform jeweils unabhängig voneinander bewegbar.

Zwar ist es auch denkbar, dass der erste Stempel relativ zum zweiten Stempel in Transportrichtung fest angeordnet ist, so dass der erste Stempel und der zweite Stempel in Transportrichtung nur zusammen bewegt werden können. Ebenfalls ist denkbar, dass die erste Pressform relativ zur zweiten Pressform in Transportrichtung fest angeordnet ist, so dass die erste Pressform und die zweite Pressform in Transportrichtung nur zusammen bewegt werden können. Jedoch ist es hinsichtlich der Prozessgeschwindigkeit vorteilhafter, wenn der erste Stempel, der zweite Stempel, die erste Pressform und die zweite Pressform jeweils relativ zueinander beweglich sind.

Vorteilhafterweise kann durch die voneinander unabhängige Bewegbarkeit der Stempel und der Pressformen die Prozessgeschwindigkeit und der Durchsatz erhöht werden, da die Bewegungsabläufe der jeweiligen Stempel und Pressformen unabhängig voneinander optimiert werden können.

Vorzugsweise sind der erste Stempel, der zweite Stempel, die erste Pressform und die zweite Pressform zumindest teilweise über teleskopartig ineinandergesteckte Hohlwellen an einer Basis der Vorrichtung gelagert.

Zumindest teilweise bedeutet hierbei, dass die innerste Welle der teleskopartig ineinandergesteckten Wellen auch eine Vollwelle sein kann. Die innerste Welle ist vorzugsweise die Welle für den in vertikaler Richtung am höchsten angeordneten Stempel oder Pressform. Die äußerste Hohlwelle ist vorzugsweise die Welle für den in vertikaler Richtung am niedrigsten angeordneten Stempel oder Pressform. Vorzugsweise ist die äußerste Hohlwelle, d.h. die Hohlwelle mit dem größten Durchmesser, an der Basis der Vorrichtung über geeignete Lagermitte! gelagert, und die restlichen Wellen sind in dieser Hohlwelle über geeignete Lagermittel gelagert. Dies vereinfacht die Montage der Vorrichtung. Mit Basis der Vorrichtung ist der Hauptkörper der Vorrichtung oder ein Rahmen der Vorrichtung gemeint. Der Antrieb für die Transportbewegung der Stempel und Pressformen kann über die jeweiligen Wellen erfolgen. Hierzu kann beispielsweise jede Welle eine Außenverzahnung aufweisen, an dem jeweils ein Zahnrad oder ein Zahnriemen oder eine Zahnkette eines Antriebsmotors angreift. Alternativ können Torque-Motoren direkt an den Wellen angeordnet werden, so dass die jeweiligen Rotoren bzw. Ausgangswellen der Motoren direkt mit den jeweiligen Wellen der Stempel oder der Pressformen verbunden sind.

Vorteilhafterweise ermöglicht die teleskopartig ineinandergesteckte Anordnung der Hohlwellen der Stempel und Pressformen eine kompakte, stabile Bauweise und eine einfache Montage der Vorrichtung

Vorzugsweise können der erste Stempel und der zweite Stempel jeweils einen Linearaktuator aufweisen, mittels welchem die jeweiligen Stempel in vertikaler Richtung verfahren werden können.

Die Linearaktuatoren können pneumatische oder hydraulische Zylinder umfassen. Vorzugsweise werden jedoch Linearservomotoren eingesetzt, welche in der Robustheit und Regelbarkeit Vorteile bieten. Durch die Linearaktuatoren können die Stempel die Pressbewegung während des Zusammenwirkens mit den zugeordneten Pressformen ausführen, d.h. der Stempel kann relativ zur zugeordneten Pressform in relativer Richtung verfahren werden, um dem Glasposten im Stempel zum Vorformling umzuformen.

Vorteilhafterweise ermöglichen die Linearaktuatoren, welche als Teil des Stempels mit dem jeweiligen Stempel mitbewegt werden, dass der Stempel die Pressbewegung unabhängig von der Transportbewegung ausführen kann. Des Weiteren kann die vertikale Bewegbarkeit dahingehend genutzt werden, dass der Stempel beim Aufnehmen des Glaspostens im Glaspostenaufnahmbebereich in der Höhe gezielt angeordnet wird, um den Glasposten in optimaler Weise aufzunehmen.

Ein weiterer Aspekt der vorliegenden Erfindung betrifft eine Blasmaschinenanlage aufweisend eine vorstehend beschriebene erfindungsgemäße Vorrichtung, ferner aufweisend eine Schmelzwanne mit einem Tropfenauslauf, eine Schere zum Abtrennen von Glasposten an dem Tropfenauslauf und eine Rotationsblasmaschine mit einer Mehrzahl von rotierbar angeordneten Arbeitstischen.

In der Schmelzwanne kann Glas geschmolzen werden, welches dann über den Tropfenauslauf entnommen werden kann. Das vom Tropfenauslauf auslaufende flüssige Glas kann mittels der Schere abgeschnitten bzw. abgetrennt werden, um einen Glasposten zu erhalten. Der Glaspostenaufnahmebereich kann im Wesentlichen direkt unter dem Tropfenauslauf angeordnet sein, oder falls eine Glaspostenrutsche vorhanden ist, am Ende der Glaspostenrutsche angeordnet sein. Die Arbeitstische sind um eine vertikale Achse karussellartig rotierbar angeordnet. Die Blasmaschinenanlage weist einen festgelegten Vorformling-Ablegebereich auf, den die Arbeitstische nacheinander durchfahren.

Die Arbeitstische können zumindest teilweise plattenförmige Bauteile sein, welche jeweils eine beispielsweise kreisförmige Ausnehmung aufweisen. Die Arbeitstische sind derart ausgelegt, dass ein Glasvorformling darauf abgelegt werden kann, so dass die Ausnehmung von dem Glasvorformling abgedeckt ist, und der Umfangsbereich des Glasvorformlings von dem Arbeitstisch getragen wird. Ein Blaskopf der Rotationsblasmaschine kann sich auf den Glasvorformling absenken, so dass sich dieser mit dem Glasvorformling luftdicht abschließt, und der Glasvorformling kann durch die Ausnehmung des Arbeitstisches aufgeblasen werden. Unter dem Arbeitstisch kann jeweils eine Blasform zum Vorgeben der Außenkontur des zu blasenden Glasprodukts angeordnet sein. Bei der Rotationsblasmaschine kann es sich insbesondere um eine Kelchblasmaschine handeln.

Vorzugsweise weist die Rotationsblasmaschine pro Arbeitstisch einen in vertikaler Richtung verfahrbaren Unterstützboden auf.

Der Unterstützboden ist unter dem jeweiligen Arbeitstisch und gegebenenfalls unter der jeweiligen Blasform angeordnet, und dreht sich mit dem jeweiligen zugeordneten Arbeitstisch mit. Die erfindungsgemäße Vorrichtung erlaubt das Vorsehen derartiger Unterstützböden. Die Unterstützböden dienen der Unterstützung der sich aufblasenden Vorformlinge bzw. Glasprodukte von unten, so dass der Ausblasvorgang besser kontrolliert werden kann.

Ein weiterer Aspekt der vorliegenden Erfindung betrifft ein Verfahren zum Pressen von Glasvorformlingen und Ablegen der Glasvorformlinge in eine Blasmaschine, umfassend die folgenden Schritte: Aufnehmen eines ersten Glaspostens mittels eines ersten Stempels in einem Glaspostenaufnahmebereich; Transportieren des ersten Glaspostens mittels des ersten Stempels zu einem ersten Vorformling-Pressbereich; Ausbilden eines ersten Glasvorformlings im ersten Vorformling-Pressbereich durch Zusammenwirkung des ersten Stempels mit einer ersten Pressform, wobei der erste Glasvorformling durch die erste Pressform aufgenommen wird; Zurückbewegen des ersten Stempels von dem ersten Vorformling-Pressbereich zum Glaspostenaufnahmebereich, nachdem der erste Glasvorformling durch die erste Pressform aufgenommen wurde; Transportieren des ersten Glasvorformlings mittels der ersten Pressform von dem ersten Vorformling-Pressbereich zu einem Vorformling-Ablegebereich und Ablegen des ersten Glasvorformlings in die Blasmaschine; Aufnehmen eines zweiten Glaspostens mittels eines zweiten Stempels in dem Glaspostenaufnahmebereich; Transportieren des zweiten Glaspostens mittels des zweiten Stempels zu einem zweiten Vorformling-Pressbereich; Ausbilden eines zweiten Glasvorformlings im zweiten Vorformling-Pressbereich durch Zusammenwirkung des zweiten Stempels mit einer zweiten Pressform, wobei der zweite Glasvorformling durch die zweite Pressform aufgenommen wird; Zurückbewegen des zweiten Stempels von dem zweiten Vorformling-Pressbereich zum Glaspostenaufnahmebereich, nachdem der zweite Glasvorformling durch die zweite Pressform aufgenommen wurde; Transportieren des zweiten Glasvorformlings mittels der zweiten Pressform von dem zweiten Vorformling-Pressbereich zu einem Vorformling-Ablegebereich und Ablegen des zweiten Glasvorformlings in die Blasmaschine.

Vorzugsweise wird der zweite Glasposten mittels des zweiten Stempels aufgenommen, nachdem der erste Glasposten mittels des ersten Stempels aufgenommen wurde und zum ersten Vorformling-Pressbereich transportiert wurde. Weiter vorzugsweise wird der zweite Glasvorformling ausgebildet, nachdem der erste Glasvorformling ausgebildet wurde. Weiter vorzugsweise wird der zweite Glasvorformling in die Blasmaschine abgelegt, nachdem der erste Glasvorformling in die Blasmaschine abgelegt wurde, und die erste Pressform zurück zum ersten Vorformling-Pressbereich bewegt wurde.

Das vorstehend zu der erfindungsgemäßen Vorrichtung und der erfindungsgemäßen Blasmaschinenanlage Erläuterte gilt entsprechend auch für das erfindungsgemäße Verfahren.

Im Folgenden werden Ausführungsbeispiele der vorliegenden Erfindung anhand der Figuren näher beschrieben. Es zeigen:
- **Fig. 1**: eine perspektivische Ansicht einer Vorrichtung gemäß eines Ausführungsbeispiels als Teil einer Blasmaschinenanlage;
- **Fig. 2**: einen Bewegungsablauf der Vorrichtung in einem ersten Zustand in einer perspektivischen Ansicht;
- **Fig. 3**: einen Bewegungsablauf der Vorrichtung in einem zweiten Zustand in einer perspektivischen Ansicht;
- **Fig. 4**: einen Bewegungsablauf der Vorrichtung in einem dritten Zustand in einer perspektivischen Ansicht;
- **Fig. 5**: einen Bewegungsablauf der Vorrichtung in einer Draufsicht;
- **Fig. 6**: eine Schnittansicht der Lagerung und des Antriebs der Vorrichtung; und
- **Fig. 7**: eine perspektivische Ansicht einer Vorrichtung gemäß eines weiteren Ausführungsbeispiels.

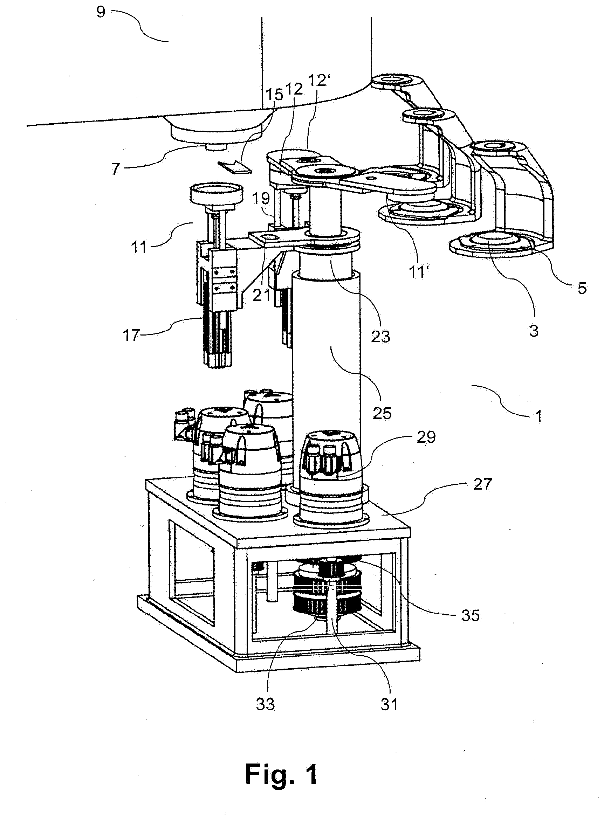

Fig. 1 zeigt ein Ausführungsbeispiel einer Vorrichtung 1 zum Pressen von Glasvorformlingen 3 und Ablegen der Vorformlinge 3 auf einem Arbeitstisch 5 einer nicht gezeigten Blasmaschine. Die nicht gezeigte Blasmaschine weist eine Mehrzahl von Arbeitstischen 5 auf, welche karussellartig um die Blasmaschine rotierbar angeordnet sind. In Fig. 1 sind jedoch nur drei dieser Arbeitstische 5 gezeigt. Die Vorrichtung 1 ist zwischen einem Tropfenauslauf 7 einer Schmelzwanne 9 und den Arbeitstischen 5 der Rotationsblasmaschine angeordnet. Die Vorrichtung 1 weist einen ersten Stempel 11 und eine dem ersten Stempel 11 zugeordneten erste Pressform 11' auf. Die Vorrichtung 1 weist ferner einen zweiten Stempel 12 und eine dem zweiten Stempel 12 zugeordnete zweite Pressform 12' auf. Die Stempel 11, 12 sind ausgelegt, am Tropfenauslauf 7 einen mittels der Schere 15 von einer Glasschmelze abgetrennten Glasposten in einem dafür vorgesehenen Aufnahmebereich aufzunehmen. Der Aufnahmebereich der Stempel kann becherförmig sein und nach oben geöffnet sein. In Zusammenwirkung mit den Pressformen 11', 12' formen die Stempel 11, 12 den Glasposten zu einem Glasvorformling 3 um. Nach dem Ausformen des Glasvorformlings 3 nimmt die Pressform 11', 12' den Glasvorformling 3 auf, beispielsweise durch Ansaugen, transportiert den Glasposten 3 weiter bis zum Arbeitstisch 5 und legt ihn dort ab, beispielsweise durch Abblasen.

Die Stempel 11, 12 weisen jeweils Linearaktuatoren 17, 19 auf, die jeweils den Stempel, insbesondere den Aufnahmebereich davon, in vertikaler Richtung linear verfahren können. Die Linearaktuatoren 17, 19 können pneumatisch, hydraulisch oder elektrisch angetrieben werden. Die Stempel 11, 12 und die Pressformen 11', 12' sind jeweils über Schwenkarme 21 mit zugeordneten Schwenkwellen 23 verbunden. Die Schwenkarme 21 können in der Länge veränderbar sein, um die Vorrichtung 1 an verschiedene Blasmaschinenanlagen anzupassen. Die Schwenkwellen 23 sind jeweils um eine vertikale Achse rotierbar gelagert. Insbesondere sind die jeweiligen Schwenkwellen 23 als ineinandergestecke Hohlwellen 23 ausgeführt, welche relativ zueinander rotierbar gelagert sind. Die äußerste Schwenkwelle 23 ist in einer hohlzylindrischen Führung 25 angeordnet und gelagert. Die hohlzylindrische Führung 25 ist mit der Basis 27 der Vorrichtung verbunden bzw. bildet Teil der Basis 27. Über die Schwenkwellen 23 und die Arme 21 sind die Stempel 11, 12 und die Pressformen 11', 12' jeweils in einer horizontalen Ebene schwenkbar mit der Vorrichtung 1 verbunden.

An der Basis 27 der Vorrichtung 1 sind ferner pro Schwenkwelle 23 bzw. pro Stempel 11, 12 und pro Pressform 11', 12' ein Antriebsmotor 29 angeordnet. Die vier Antriebsmotoren 29 treiben jeweils eine Antriebswelle 31 an, wobei die Antriebswellen 31 jeweils ein Antriebszahnrad 33 aufweisen. Andererseits weisen die Schwenkwellen 23 jeweils ein Zahnrad 35 im unteren Endbereich der Schwenkwellen 23 auf. Die jeweiligen Antriebszahnräder 33 der Antriebswellen 31 sind über nicht gezeigte Zahnriemen mit den jeweiligen zugeordneten Zahnrädern 35 der Schwenkwellen 23 verbunden. So können die jeweiligen Schwenkwellen 23 über die jeweiligen Antriebsmotoren 29 unabhängig voneinander angetrieben werden. Die Steuer- und/oder Regeleinheit zum Steuern und/oder Regeln der Antriebsmotoren 29 und/oder der Linearaktuatoren 17, 19 ist nicht gezeigt.

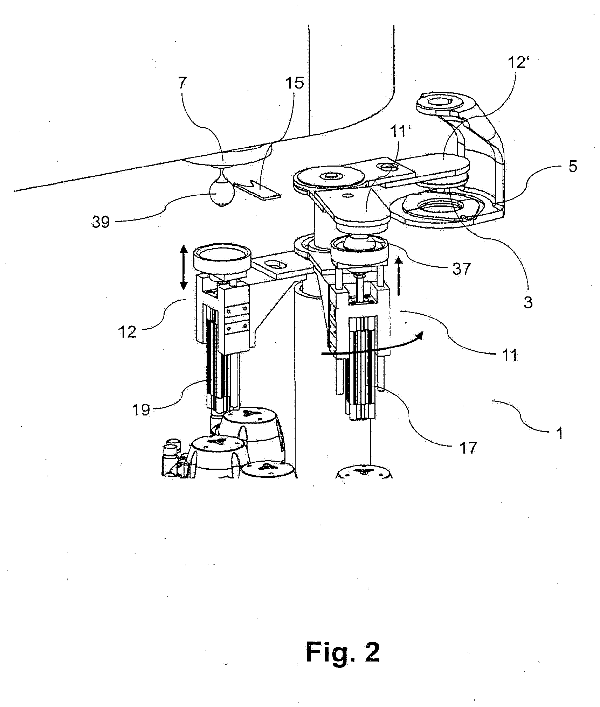

Fig. 2 zeigt einen Bewegungsablauf der Vorrichtung 1 in einem ersten Zustand. In diesem ersten Zustand hat der erste Stempel 11 bereits einen Glasposten 37 aufgenommen und wurde bereits in den ersten Vorformling-Pressbereich geschwenkt, wo dieser zu der ersten Pressform 11' derart ausgerichtet wurde, dass der erste Stempel 11 in vertikaler Richtung direkt unter der ersten Pressform 11' angeordnet ist. Im gezeigten ersten Zustand fährt der Stempel 11 mittels des Linearaktuators 17 in vertikaler Richtung nach oben aus, um zusammen mit der ersten Pressform 11' einen Glasvorformling aus dem Glasposten 37 auszubilden. Hierbei werden der erste Stempel 11 und die erste Pressform 11' winkelsynchron weitergeschwenkt, so dass während des Pressvorgangs des Glasvorformlings der Glasposten 37 bzw. der Glasvorformling weiter in Richtung der Rotationsblasmaschine bewegt wird. Die Schwenkrichtung des ersten Stempels 11 und der ersten Pressform 11' ist hierbei gegen den Uhrzeigersinn, wenn man die Vorrichtung 1 in der Draufsicht (von oben aus) betrachtet. Der Bewegungsbereich bzw. Winkelbereich, in dem der (erst oder zweite) Stempel und die zugeordnete (erste oder zweite) Pressform im zueinander ausgerichteten Zustand sind und sich gegebenenfalls winkelsynchron bewegen, kann als (erster oder zweiter) Vorformling-Pressbereich bezeichnet werden. Hingegen ist im gezeigten ersten Zustand die zweite Pressform 12' im Vorformling-Ablegebereich angeordnet, wo es gerade dabei ist, den zuvor ausgeformten Glasvorformling 3 auf dem Arbeitstisch 5 der Blasmaschine abzulegen. Andererseits ist im gezeigten ersten Zustand der zweite Stempel 12 im Glaspostenannahmebereich unter dem Tropfenauslass 7 angeordnet und ist dabei, einen neuen Glasposten aufzunehmen, welcher von der flüssigen Glasschmelze 39 mittels der Schere 15 abgeschnitten wird. Wie durch die Pfeile angedeutet ist, kann der Stempel 12 hierbei mittels des Linearaktuators 19 in vertikaler Richtung verfahren werden, um die Auffanglage des Glaspostens im Stempel 12 zu beeinflussen.

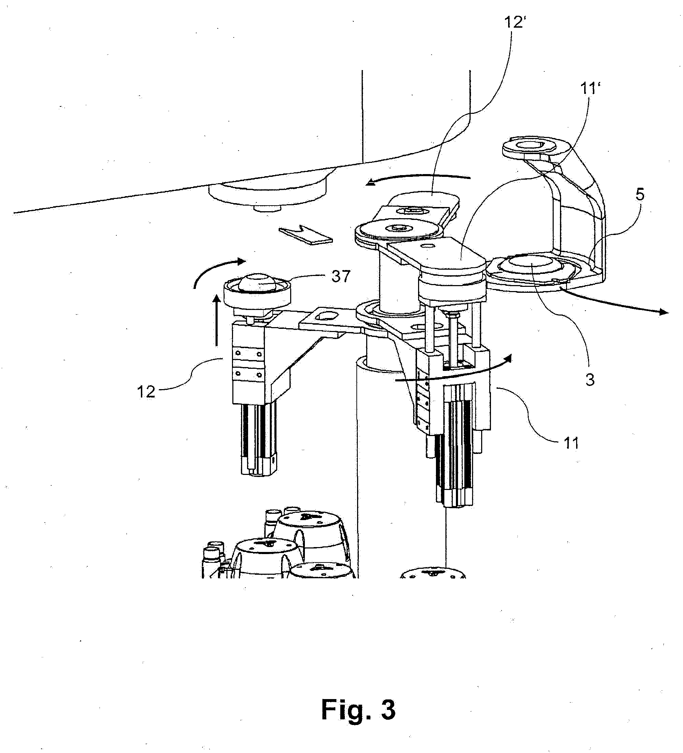

Fig. 3 zeigt einen Bewegungsablauf der Vorrichtung 1 in einem zweiten Zustand, welcher ein Zustand kurz nach dem in Fig. 2 gezeigten ersten Zustand ist. Im zweiten Zustand hat der zweite Stempel 12 den Glasposten 37 aufgenommen, und bewegt sich von dem Glaspostenaufnahmebereich weg hin zum zweiten Vorformling-Pressbereich. Die Schwenkrichtung des zweiten Stempels 12 ist hierbei im Uhrzeigersinn, wenn man die Vorrichtung 1 in der Draufsicht betrachtet. Andererseits hat im zweiten Zustand die zweite Pressform 12' den Glasvorformling 3 auf dem Arbeitstisch 5 abgelegt, und der Arbeitstisch 5 bewegt sich von dem Vorformling-Ablegebereich weg. Die Blasmaschine kann ausgelegt sein, dass die jeweiligen Arbeitstische 5 im Vorformling-Ablegebereich ihre Geschwindigkeit verlangsamen, kurz anhalten oder ohne Änderung der Geschwindigkeit den Vorformling-Ablegebereich passieren. Die zweite Pressform 12' bewegt sich im zweiten Zustand von dem Vorformling-Ablegebereich weg in Richtung des zweiten Vorformling-Pressbereichs. In anderen Worten bewegen sich der zweite Stempel 12 und die zweite Pressform 12' im zweiten Zustand aufeinander zu, um sich im zweiten Vorformling-Pressbereich zueinander auszurichten. Der erste Stempel 11 und die erste Pressform 11' sind im zweiten Zustand geschlossen und pressformen den Glasvorformling, wobei der erste Stempel 11 und die erste Pressform 11' winkelsynchron in Richtung der Rotationsblasmaschine weitergeschwenkt werden.

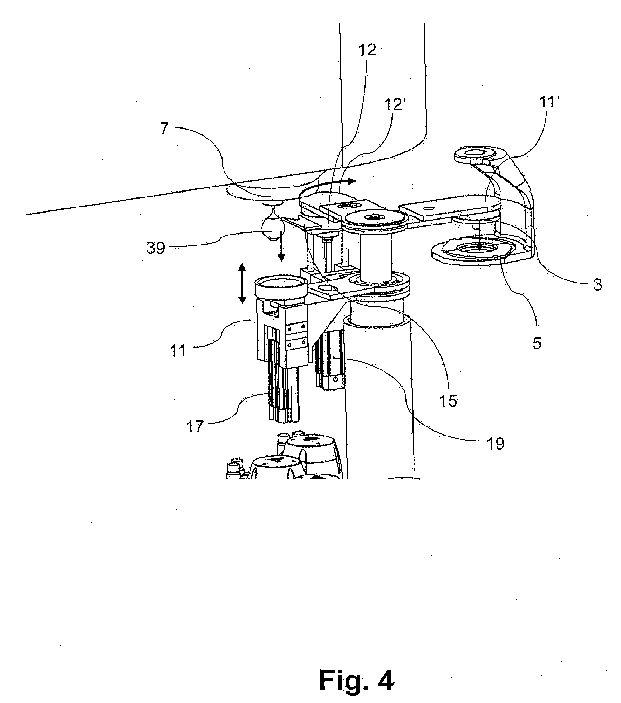

Fig. 4 zeigt einen Bewegungsablauf der Vorrichtung 1 in einem dritten Zustand, welcher ein Zustand etwas nach dem in Fig. 3 gezeigten zweiten Zustand ist. In diesem dritten Zustand wurde der zweite Stempel 12 bereits in den zweiten Vorformling-Pressbereich geschwenkt, zu der zweiten Pressform 12' ausgerichtet und verpresst dort in Zusammenwirkung mit der zweiten Pressform 12' durch vertikales Verfahren mittels des Linearaktuators 19 den zuvor aufgenommenen Glasposten zu einem Glasvorformling. Während des Ausbildens des Glasvorformlings werden der zweite Stempel 12 und die zweite Pressform 12' winkelsynchron weitergeschwenkt, so dass während des Pressvorgangs des Glasvorformlings der Glasposten bzw. der Glasvorformling weiter in Richtung der Rotationsblasmaschine bewegt wird. Die Schwenkrichtung des zweiten Stempels 12 und der zweiten Pressform 12' ist hierbei im Uhrzeigersinn, wenn man die Vorrichtung 1 in der Draufsicht betrachtet. Im gezeigten dritten Zustand ist hingegen die erste Pressform 11' im Vorformling-Ablegebereich angeordnet, wo es gerade dabei ist, den zuvor ausgeformten Glasvorformling 3 auf dem Arbeitstisch 5 der Blasmaschine abzulegen. Andererseits ist im gezeigten dritten Zustand der erste Stempel 11 im Glaspostenannahmebereich unter dem Tropfenauslass 7 angeordnet und ist dabei, einen neuen Glasposten aufzunehmen, welcher von der flüssigen Glasschmelze 39 mittels der Schere 15 abgeschnitten wird. Wie durch die Pfeile angedeutet ist, kann der Stempel 11 hierbei mittels des Linearaktuators 17 in vertikaler Richtung verfahren werden, um die Auffanglage des Glaspostens im Stempel 11 zu beeinflussen. Der in Fig. 4 gezeigte dritte Zustand entspricht in etwa einem Zustand zwischen dem in Fig. 2 gezeigten ersten Zustand und dem in Fig. 3 gezeigten zweiten Zustand, mit dem Unterschied, dass die Lagen und Bewegungsrichtungen des ersten Stempels 11 und des zweiten Stempels 12, sowie die Lagen und Bewegungsrichtungen der ersten Pressform 11' und der zweiten Pressform 12', vertauscht sind.

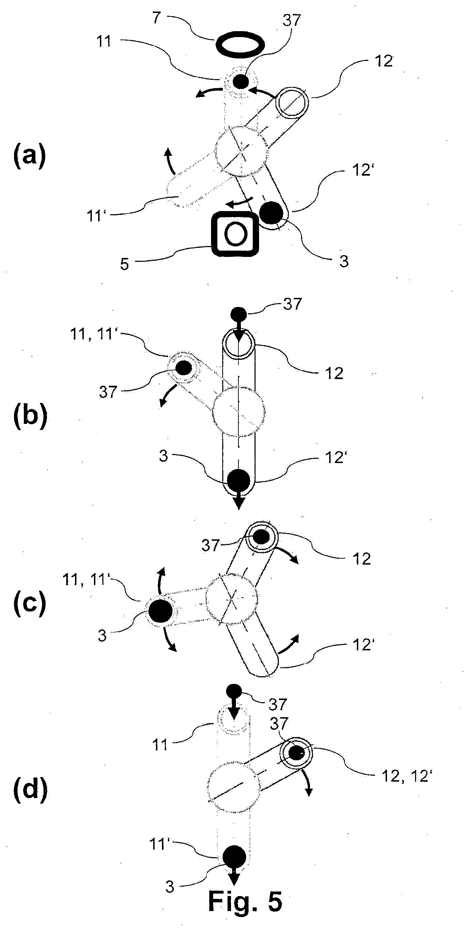

Fig. 5 zeigt einen Bewegungsablauf der Vorrichtung 1 zur besseren Verständlichkeit noch einmal in einer Draufsicht. In Fig. 5(a) bis 5(d) sind vier aufeinanderfolgende Zustände (a) bis (d) der Stempel 11, 12 und der Pressformen 11', 12' während des Bewegungsablaufs der Vorrichtung dargestellt.

In dem in Fig. 5(a) gezeigten Zustand (a) ist der erste Stempel 11 im Glaspostenannahmebereich unter dem Tropfenauslass 7 angeordnet. Der erste Stempel 11 hat in dem Zustand (a) bereits einen Glasposten 37 aufgenommen und ist dabei, sich mit dem ersten Glasposten 37 in Richtung des ersten Vorformling-Pressbereichs von dem Glaspostenaufnahmebereich weg zu bewegen. Die erste Pressform 11' bewegt sich in dem Zustand (a) in Richtung des ersten Vorformling-Pressbereichs auf den ersten Stempel 11 zu. Andererseits hat im Zustand (a) die zweite Pressform 12' bereits die in Zusammenwirkung mit dem zweiten Stempel 12 ausgeformten Glasvorformling 3 aufgenommen, und bewegt sich in Richtung des Vorformling-Ablegebereichs. Der zweite Stempel 12 hingegen bewegt sich zurück in Richtung des Glaspostenaufnahmebereichs. Zur besseren Verständlichkeit ist in Fig. 5(a) der Arbeitstisch 5 in dem Vorformling-Ablegebereich angedeutet. Tatsächlich muss jedoch der sich rotierende Arbeitstisch 5 im Zustand (a) nicht in dem Vorformling-Ablegebereich angeordnet sein. In den Figuren 5(a) bis 5(d) befindet sich der Glaspostenaufnahmebereich stets an der "12-Uhr Position", und der Vorformling-Ablegebereich befindet sich stets an der "6-Uhr Position". Der Glaspostenaufnahmebereich und der Vorformling-Ablegebereich müssen jedoch nicht zwingend um 180° versetzt angeordnet sein. In den Figuren 5(b) bis 5(d) sind der Einfachheit halber der Tropfenauslass 7 und der Arbeitstisch 5 nicht mehr dargestellt.

In dem in Fig. 5(b) gezeigten Zustand (b) sind der erste Stempel 11 und die erste Pressform 11' zueinander ausgerichtet bzw. übereinander angeordnet und sind dabei, durch gegenseitiges Verfahren in vertikaler Richtung den Glasposten 37 zu einem Glasvorformling umzuformen. Dabei bewegen sich der erste Stempel 11 und die erste Pressform 11' zueinander ausgerichtet in horizontaler Richtung weiter. In diesem Zustand befinden sich sowohl der erste Stempel als auch die erste Pressform in dem ersten Vorformling-Pressbereich. Andererseits ist im Zustand (b) der zweite Stempel 12 in der Glaspostenaufnahmeposition angeordnet und ist dabei, einen neuen Glasposten 37 aufzunehmen. Hingegen ist die zweite Pressform 12' in dem Vorformling-Ablegebereich angeordnet und ist dabei, den Glasvorformling 3 in die Blasmaschine abzulegen.

In dem in Fig. 5(c) gezeigten Zustand (c) haben der erste Stempel 11 und die erste Pressform 11' den Glasposten zu einem Glasvorformling 3 umgeformt. Die erste Pressform 11' ist dabei, den fertig ausgebildeten Glasvorformling 3 aufzunehmen und sich in Richtung des Vorformling-Ablegebereichs zu bewegen, während der erste Stempel 11 dabei ist, sich ohne den Glasvorformling 3 zurück in Richtung des Glaspostenaufnahmebereichs zu bewegen. Im Zustand (c) befinden sich der erste Stempel 11 und die erste Pressform 11' also in einer Endlage des ersten Vorformling-Pressbereichs. Andererseits bewegt sich im Zustand (c) die zweite Pressform 12', welche zuvor den Glasvorformling in die Blasmaschine abgelegt hat, wieder zurück in Richtung des zweiten Vorformling-Pressbereichs, und der zweite Stempel 12, welcher zuvor den neuen Glasposten 37 aufgenommen hat, bewegt sich in entgegengesetzter Schwenkrichtung ebenfalls in Richtung des zweiten Vorformling-Pressbereichs.

In dem in Fig. 5(d) gezeigten Zustand (d) ist der erste Stempel 11 in der Glaspostenaufnahmeposition angeordnet und ist dabei, einen neuen Glasposten 37 aufzunehmen. Hingegen ist die erste Pressform 11' in dem Vorformling-Ablegebereich angeordnet und ist dabei, den Glasvorformling 3 in die Blasmaschine abzulegen. Andererseits sind der zweite Stempel 12 und die zweite Pressform 12' zueinander ausgerichtet bzw. übereinander angeordnet und sind dabei, durch gegenseitiges Verfahren in vertikaler Richtung den Glasposten 37 zu einem Glasvorformling umzuformen. Dabei bewegen sich der zweite Stempel 12 und die zweite Pressform 12' zueinander ausgerichtet in horizontaler Richtung weiter. In diesem Zustand befinden sich sowohl der zweite Stempel als auch die zweite Pressform in dem zweiten Vorformling-Pressbereich.

Der Zustand (d) entspricht dem Zustand (b) mit dem Unterschied, dass die Lagen und Bewegungsrichtungen des ersten Stempels 11 und des zweiten Stempels 12, sowie die Lagen und Bewegungsrichtungen der ersten Pressform 11' und der zweiten Pressform 12' vertauscht sind. So ermöglicht der Bewegungsablauf der Vorrichtung ein kontinuierliches Pressen und Ablegen von Glasvorformlingen.

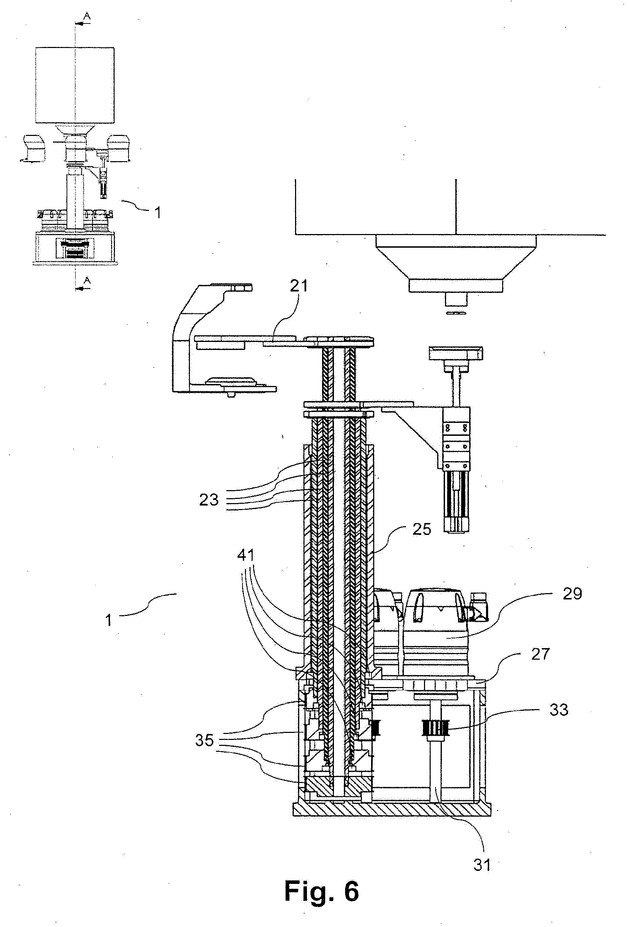

Fig. 6 zeigt eine Schnittansicht der Lagerung und des Antriebs der Vorrichtung 1 entlang der Schnittlinie A-A, wie in der verkleinerten Darstellung der Vorrichtung 1 oben links angedeutet. Die Schwenkwellen 23 der Stempel 11, 12 und der Pressformen 11', 12' sind als ineinandergesteckte Hohlwellen 23 ausgeführt. Am oberen Ende sind die Schwenkwellen 23 jeweils mit den Schwenkarmen 21 der jeweiligen Stempel 11, 12 und Pressformen 11', 12' verbunden. Vorzugsweise ist der in vertikaler Richtung am tiefsten angeordnete Stempel 11, 12 oder Pressform 11', 12' mit dem (in radialer Richtung) äußersten der Schwenkwellen 23 verbunden, der am zweittiefsten angeordnete Stempel 11, 12 oder Pressform 11', 12' mit dem zweitäußersten der Schwenkwellen 23 verbunden, der am dritttiefsten angeordnete Stempel 11, 12 oder Pressform 11', 12' mit dem drittäußersten der Schwenkwellen 23 verbunden, und der am höchsten angeordnete Stempel 11, 12 oder Pressform 11', 12' mit dem innersten der Schwenkwellen 23 verbunden. Beispielsweise ist die äußerste Schwenkwelle 23 mit dem ersten Stempel 11 verbunden, die zweitäußerste Schwenkwelle 23 mit dem zweiten Stempel 12 verbunden, die drittäußerste Schwenkwelle 23 mit der ersten Pressform 11' verbunden, und die innerste Schwenkwelle 23 mit der zweiten Pressform 12' verbunden. Die äußerste Schwenkwelle 23 ist mittels eines Wälzlagers 41 in der hohlzylindrischen Führung 25 der Basis 27 der Vorrichtung 1 gelagert. In ähnlicher Weise ist die zweitäußerste Schwenkwelle 23 mittels eines weiteren Wälzlagers 41 in der äußersten Schwenkwelle 23 gelagert, die drittäußerste Schwenkwelle 23 mittels eines weiteren Wälzlagers 41 in der zweitäußersten Schwenkwelle 23 gelagert, und die innerste Schwenkwelle 23 mittels eines weiteren Wälzlagers 41 in der drittäußersten Schwenkwelle 23 gelagert. Am unteren Ende der jeweiligen Schwenkwellen 23 sind jeweils Zahnräder 35 angeordnet. Die vier Zahnräder 35 weisen die gleiche Größe auf und sind konzentrisch übereinander angeordnet. Die Zahnräder 35 können ähnlich wie Endkappen an den unteren Enden der jeweiligen Schwenkwellen 23 auf geeignete Weise mit diesen drehfest verbunden werden. Die endkappenartigen Zahnräder 35, insbesondere die der äußersten, zweitäußersten und drittäußersten Schwenkwellen 23, können jeweils zur Aufnahme eines der Wälzlager 41 ausgebildet sein. Die Zahnräder 35 sind jeweils mit einem der Antriebszahnräder 33 der vier Antriebsmotoren 29 über Zahnriemen verbunden. Durch Antreiben der jeweiligen Antriebswellen 31 der Antriebsmotoren 29, auf denen jeweils die Antriebszahnräder 33 drehfest angeordnet sind, können die jeweiligen Schwenkwellen 23 rotiert und somit die jeweiligen Stempel 11, 12 und Pressformen 11', 12' geschwenkt werden.

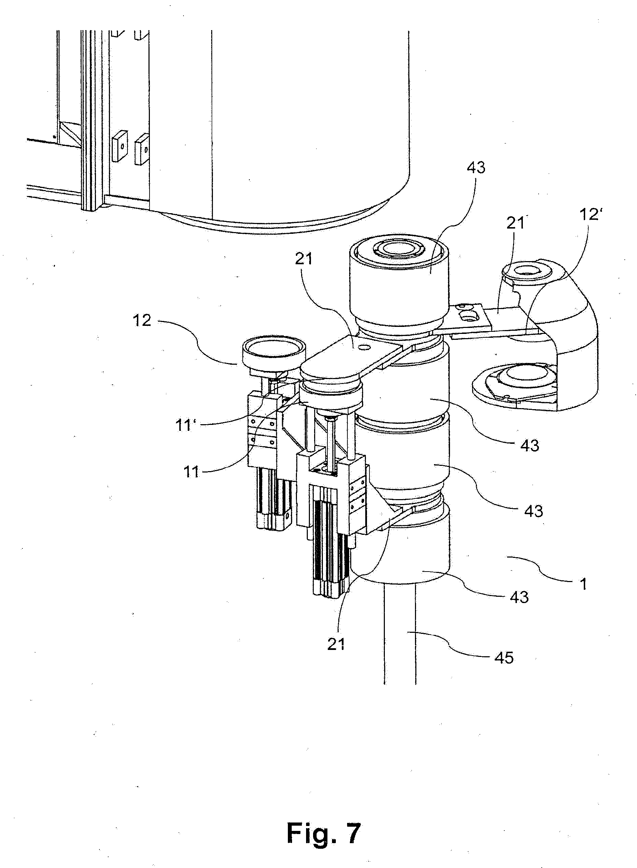

Fig. 7 zeigt eine perspektivische Ansicht einer Vorrichtung 1 gemäß eines weiteren Ausführungsbeispiels. Die Vorrichtung 1 gemäß dieses Ausführungsbeispiels unterscheidet sich von dem zuvor beschriebenen Ausführungsbeispiel in der Ausgestaltung des Antriebs der Stempel 11, 12 und der Pressformen 11', 12'. In dem in Fig. 7 gezeigten Ausführungsbeispiel sind die Stempel 11, 12 und Pressformen 11', 12', genauer gesagt die Schwenkarme 21 davon, jeweils direkt mit der Ausgangswelle eines Motors 43, insbesondere eines Torque-Motors 43, verbunden. Die Motoren 43 sind auf einer gemeinsamen Montagewelle 45 angeordnet, dessen Längsachse mit der Drehachse der Stempel 11, 12 und der Pressformen 11', 12' entspricht. Die Montagewelle 45 ist vorzugsweise mit einer Basis der Vorrichtung 1 verbunden. Die Ausgangsseiten der Motoren 43 der ersten Pressform 11' und der zweiten Pressform 12' sind zueinander gerichtet, wobei diese Anordnung als Überkopfanordnung bezeichnet werden kann. Diese Anordnung ermöglicht einen geringen Höhenversatz der ersten Pressform 11' und der zweiten Pressform 12'. Auf ähnliche Weise sind die Motoren 43 des ersten Stempels 11 und des zweiten Stempels 12 in einer Überkopfanordnung angeordnet.

### Bezugszeichenliste

- 1: Vorrichtung
- 3: Glasvorformling
- 5: Arbeitstisch
- 7: Tropfenauslauf
- 9: Schmelzwanne
- 11: erster Stempel
- 12: zweiter Stempel
- 11': erste Pressform
- 12': zweite Pressform
- 15: Schere
- 17: Linearaktuator (erster Stempel)
- 19: Linearaktuator (zweiter Stempel)
- 21: Schwenkarm
- 23: Schwenkwelle, Hohlwelle
- 25: hohlzylindrische Führung
- 27: Basis
- 29: Antriebsmotor
- 31: Antriebswelle
- 33: Antriebszahnrad
- 35: Zahnrad
- 37: Glasposten
- 39: Glasschmelze
- 41: Wälzlager
- 43: Motor
- 45: Montagewelle

## Patentansprüche

1. Vorrichtung (1) zum Pressen von Glasvorformlingen (3) und Ablegen der Glasvorformlinge (3) in eine Blasmaschine, aufweisend:
einen ersten Stempel (11), welcher zwischen einem Glaspostenaufnahmebereich und einem ersten Vorformling-Pressbereich hin und her bewegbar ist;
einen zweiten Stempel (12), welcher zwischen dem Glaspostenaufnahmebereich und einem zweiten Vorformling-Pressbereich hin und her bewegbar ist;
eine erste Pressform (11'), die dem ersten Stempel (11) zugeordnet ist und zwischen dem ersten Vorformling-Pressbereich und einem Vorformling-Ablegebereich hin und her bewegbar ist;
eine zweite Pressform (12'), die dem zweiten Stempel (12) zugeordnet ist und zwischen dem zweiten Vorformling-Pressbereich und dem Vorformling-Ablegebereich hin und her bewegbar ist;
wobei die jeweiligen Stempel (11, 12) mit den jeweiligen zugeordneten Pressformen (11', 12') in den jeweiligen Vorformling-Pressbereichen derart zusammenwirken können, dass ein im Glaspostenaufnahmebereich von einem der jeweiligen Stempel (11, 12) aufgenommener Glasposten (37) zu einem Glasvorformling (3) umgeformt wird und von der zugeordneten Pressform (11', 12') aufgenommen wird;
wobei die Vorrichtung (1) derart konfiguriert ist, dass nach dem Zusammenwirken des jeweiligen Stempels (11, 12) mit der zugeordneten Pressform (11', 12') der jeweilige Stempel (11, 12) zurück zum Glaspostenaufnahmebereich bewegt wird, während die jeweilige Pressform (11', 12') zum Vorformling-Ablegebereich bewegt wird, um dort den Glasvorformling (3) in die Blasmaschine abzulegen;
wobei der erste Stempel (11), der zweite Stempel (12), die erste Pressform (11') und die zweite Pressform (12') jeweils um eine gemeinsame vertikale Achse schwenkbar angeordnet sind; und
wobei die Bewegung des ersten Stempels (11) von dem Glaspostenaufnahmebereich zum ersten Vorformling-Pressbereich und die Bewegung des zweiten Stempels (12) von dem Glaspostenaufnahmebereich zum zweiten Vorformling-Pressbereich in entgegengesetzte Drehrichtungen verlaufen.

2. Vorrichtung (1) nach Anspruch 1, wobei der erste Stempel (11), der zweite Stempel (12), die erste Pressform (11') und die zweite Pressform (12') jeweils unabhängig voneinander bewegbar sind.

3. Vorrichtung (1) nach Anspruch 1 oder 2, wobei der erste Stempel (11), der zweite Stempel (12), die erste Pressform (11') und die zweite Pressform (12') zumindest teilweise über teleskopartig ineinandergesteckte Hohlwellen (23) an einer Basis (27) der Vorrichtung gelagert sind.

4. Vorrichtung (1) nach einem der vorangehenden Ansprüche, wobei der erste Stempel (11) und der zweite Stempel (12) jeweils einen Linearaktuator (17, 19) aufweisen, mittels welchem die jeweiligen Stempel (11, 12) in vertikaler Richtung verfahren werden können.

5. Blasmaschinenanlage (100) aufweisend eine Vorrichtung (1) nach einem der vorangehenden Ansprüche, ferner aufweisend eine Schmelzwanne (9) mit einem Tropfenauslauf (7), eine Schere (15) zum Abtrennen von Glasposten (37) an dem Tropfenauslauf (7) und eine Rotationsblasmaschine mit einer Mehrzahl von rotierbar angeordneten Arbeitstischen (5).

6. Blasmaschinenanlage (100) nach Anspruch 5, wobei die Rotationsblasmaschine pro Arbeitstisch (5) einen in vertikaler Richtung verfahrbaren Unterstützboden aufweist.

7. Verfahren zum Pressen von Glasvorformlingen (3) und Ablegen der Glasvorformlinge (3) in eine Blasmaschine, umfassend die folgenden Schritte:
Aufnehmen eines ersten Glaspostens (37) mittels eines ersten Stempels (11) in einem Glaspostenaufnahmebereich;
Transportieren des ersten Glaspostens (37) mittels des ersten Stempels (11) zu einem ersten Vorformling-Pressbereich;
Ausbilden eines ersten Glasvorformlings (3) im ersten Vorformling-Pressbereich durch Zusammenwirkung des ersten Stempels (11) mit einer ersten Pressform (11'), wobei der erste Glasvorformling (3) durch die erste Pressform (11') aufgenommen wird;
Zurückbewegen des ersten Stempels (11) von dem ersten Vorformling-Pressbereich zum Glaspostenaufnahmebereich, nachdem der erste Glasvorformling (3) durch die erste Pressform (11') aufgenommen wurde;
Transportieren des ersten Glasvorformlings (3) mittels der ersten Pressform (11') von dem ersten Vorformling-Pressbereich zu einem Vorformling-Ablegebereich und Ablegen des ersten Glasvorformlings (3) in die Blasmaschine;
Aufnehmen eines zweiten Glaspostens (37) mittels eines zweiten Stempels (12) in dem Glaspostenaufnahmebereich;
Transportieren des zweiten Glaspostens (37) mittels des zweiten Stempels (12) zu einem zweiten Vorformling-Pressbereich;
Ausbilden eines zweiten Glasvorformlings (3) im zweiten Vorformling-Pressbereich durch Zusammenwirkung des zweiten Stempels (12) mit einer zweiten Pressform (12'), wobei der zweite Glasvorformling (3) durch die zweite Pressform (12') aufgenommen wird;
Zurückbewegen des zweiten Stempels (12) von dem zweiten Vorformling-Pressbereich zum Glaspostenaufnahmebereich, nachdem der zweite Glasvorformling (3) durch die zweite Pressform (12') aufgenommen wurde;
Transportieren des zweiten Glasvorformlings (3) mittels der zweiten Pressform (12') von dem zweiten Vorformling-Pressbereich zu einem Vorformling-Ablegebereich und Ablegen des zweiten Glasvorformlings (3) in die Blasmaschine;
wobei der erste Stempel (11), der zweite Stempel (12), die erste Pressform (11') und die zweite Pressform (12') jeweils um eine gemeinsame vertikale Achse schwenkbar angeordnet sind; und
wobei die Bewegung des ersten Stempels (11) von dem Glaspostenaufnahmebereich zum ersten Vorformling-Pressbereich und die Bewegung des zweiten Stempels (12) von dem Glaspostenaufnahmebereich zum zweiten Vorformling-Pressbereich in entgegengesetzte Drehrichtungen verlaufen.

## Claims

1. A device (1) for pressing glass pre-forms (3) and depositing the glass pre-forms (3) into a blowing machine, comprising:
a first plunger (11) which is able to be reciprocated between a glass gob-receiving region and a first pre-form pressing region;
a second plunger (12) which is able to be reciprocated between the glass gob-receiving region and a second pre-form pressing region;
a first press mould (11') which is associated with the first plunger (11) and which is able to be reciprocated between the first pre-form pressing region and a pre-form depositing region;
a second press mould (12') which is associated with the second plunger (12) and which is able to be reciprocated between the second pre-form pressing region and the pre-form-depositing region;
wherein the respective plungers (11, 12) are able to cooperate with the respectively associated press moulds (11', 12') in the respective pre-form pressing regions, such that a glass gob (37) which is received in the glass gob receiving region by one of the respective plungers (11, 12) is formed into a glass pre-form (3) and is received by the associated press mould (11', 12');
wherein the device (1) is configured such that after the cooperation of the respective plunger (11, 12) with the associated press mould (11', 12') the respective plunger (11, 12) is moved back to the glass gob receiving region, whilst the respective press mould (11', 12') is moved to the pre-form depositing region in order to deposit the glass pre-form (3) into the blowing machine at that point;
wherein the first plunger (11), the second plunger (12), the first press mould (11') and the second press mould (12') are in each case pivotably arranged about a common vertical axis; and
wherein the movement of the first plunger (11) from the glass gob receiving region to the first pre-form pressing region and the movement of the second plunger (12) from the glass gob receiving region to the second pre-form pressing region run in opposing rotational directions.

2. The device (1) according to Claim 1, wherein the first plunger (11), the second plunger (12), the first press mould (11') and the second press mould (12') are in each case movable independently of one another.

3. The device (1) according to Claim 1 or 2, wherein the first plunger (11), the second plunger (12), the first press mould (11') and the second press mould (12') are at least partially mounted on a base (27) of the device via hollow shafts (23) which are inserted into one another in a telescopic manner.

4. The device (1) according to one of the preceding claims, wherein the first plunger (11) and the second plunger (12) in each case comprise a linear actuator (17, 19), the respective plungers (11, 12) being able to be moved thereby in the vertical direction.

5. A blowing machine system (100) comprising a device (1) according to one of the preceding claims, further comprising a melting tank (9) having a drop outlet (7), shears (15) for cutting glass gobs (37) at the drop outlet (7) and a rotary blowing machine having a plurality of rotatably arranged work tables (5).

6. The blowing machine system (100) according to Claim 5, wherein the rotary blowing machine comprises one support base per work table (5), said support base being movable in the vertical direction.

7. A method for pressing glass pre-forms (3) and depositing the glass pre-forms (3) into a blowing machine, comprising the following steps:
receiving a first glass gob (37) by means of a first plunger (11) in a glass gob receiving region;
transporting the first glass gob (37) by means of the first plunger (11) to a first pre-form pressing region;
forming a first glass pre-form (3) in the first pre-form pressing region by the cooperation of the first plunger (11) with a first press mould (1 1'), wherein the first glass pre-form (3) is received by the first press mould (11');
moving back the first plunger (11) from the first pre-form pressing region to the glass gob receiving region after the first glass pre-form (3) has been received by the first press mould (11');
transporting the first glass pre-form (3) by means of the first press mould (11') from the first pre-form pressing region to a pre-form depositing region and depositing the first glass pre-form (3) into the blowing machine;
receiving a second glass gob (37) by means of a second plunger (12) in the glass gob receiving region;
transporting the second glass gob (37) by means of the second plunger (12) to a second pre-form pressing region;
forming a second glass pre-form (3) in the second pre-form pressing region by the cooperation of the second plunger (12) with a second press mould (12'), wherein the second glass pre-form (3) is received by the second press mould (12');
moving back the second plunger (12) from the second pre-form pressing region to the glass gob receiving region after the second glass pre-form (3) has been received by the second press mould (12');
transporting the second glass pre-form (3) by means of the second press mould (12') from the second pre-form pressing region to a pre-form depositing region and depositing the second glass pre-form (3) into the blowing machine;
wherein the first plunger (11), the second plunger (12), the first press mould (11') and the second press mould (12') are in each case pivotably arranged about a common vertical axis; and
wherein the movement of the first plunger (11) from the glass gob receiving region to the first pre-form pressing region and the movement of the second plunger (12) from the glass gob receiving region to the second pre-form pressing region run in opposing rotational directions.

## Revendications

1. Dispositif (1) de pressage de préformes en verre (3) et d'application des préformes en verre (3) dans une souffleuse, présentant :
un premier poinçon (11), lequel est déplaçable en va-et-vient entre une zone de réception des paraisons et une première zone de pressage des préformes ;
un second poinçon (12), lequel est déplaçable en va-et-vient entre la zone de réception des paraisons et une seconde zone de pressage des préformes ;
une première matrice (11'), qui est associée au premier poinçon (11) et déplaçable en va-et-vient entre la première zone de pressage des préformes et une zone d'application des préformes ;
une seconde matrice (12'), qui est associée au second poinçon (12) et déplaçable en va-et-vient entre la seconde zone de pressage des préformes et la zone d'application des préformes ;
dans lequel les poinçons respectifs (11, 12) peuvent interagir avec les matrices associées respectives (11', 12') dans les zones de pressage respectives des préformes, de sorte qu'une paraison (37) cueillie par l'un des poinçons respectifs (11, 12) dans la zone de réception des paraisons est transformée en une préforme en verre (3) et est recueillie par la matrice associée (11', 12') ;
dans lequel le dispositif (1) est configuré de sorte que le poinçon respectif (11, 12) est déplacé pour revenir à la zone de réception des paraisons après l'interaction du poinçon respectif (11, 12) avec la matrice associée (11', 12'), pendant que la matrice respective (11', 12') est déplacée vers la zone d'application des préformes pour y déposer la préforme en verre (3) dans la souffleuse ;
dans lequel le premier poinçon (11), le second poinçon (12), la première matrice (11') et la seconde matrice (12') sont respectivement disposés de manière à pouvoir pivoter autour d'un axe vertical commun ; et
dans lequel le mouvement du premier poinçon (11) se fait de la zone de réception des paraisons vers la première zone de pressage des préformes et le mouvement du second poinçon (12) de la zone de réception des paraisons vers la seconde zone de pressage des préformes dans des sens de rotation opposés.

2. Dispositif (1) selon la revendication 1, dans lequel le premier poinçon (11), le second poinçon (12), la première matrice (11') et la seconde matrice (12') sont respectivement déplaçables indépendamment les uns des autres.

3. Dispositif (1) selon la revendication 1 ou 2, dans lequel le premier poinçon (11), le second poinçon (12), la première matrice (11') et la seconde matrice (12') sont montés à une base (27) du dispositif au moins en partie à l'aide d'arbres creux (23) emboîtés les uns dans les autres de manière télescopique.

4. Dispositif (1) selon l'une des revendications précédentes, dans lequel le premier poinçon (11) et le second poinçon (12) présentent respectivement un actionneur linéaire (17, 19), au moyen duquel les poinçons respectifs (11, 12) peuvent être déplacés à la verticale.

5. Installation de souffleuse (100) présentant un dispositif (1) selon l'une des revendications précédentes, présentant de plus une cuve de vitrification (9) dotée d'un orifice de coulée de larmes (7), une cisaille (15) servant à détacher les paraisons (37) au niveau de l'orifice de coulée de larmes (7) et une souffleuse rotative, pourvue de plusieurs porte-pièces disposés de manière à pouvoir pivoter.

6. Installation de souffleuse (100) selon la revendication 5, dans laquelle la souffleuse rotative présente un fond d'appui déplaçable à la verticale par porte-pièce (5).

7. Procédé de pressage de pressage de préformes en verre (3) et d'application des préformes en verre (3) dans une souffleuse, comprenant les étapes suivantes :
le cueillage d'une première paraison (37) au moyen d'un premier poinçon (11) dans une zone de réception des paraisons ;
le transport de la première paraison (37) vers une première zone de pressage des préformes au moyen du premier poinçon (11) ;
le façonnage d'une première préforme en verre (3) dans la première zone de pressage des préformes par l'interaction du premier poinçon (11) avec une première matrice (11'), dans lequel la première préforme en verre (3) est recueillie par la première matrice (11') ;
le mouvement de retour du premier poinçon (11) de la première zone de pressage des préformes vers la zone de réception des paraisons, après que la première préforme en verre (3) a été recueillie par la première matrice (11') ;
le transport de la première préforme en verre (3) de la première zone de pressage des préformes vers une zone d'application des préformes au moyen de la première matrice (11') et la dépose de la première préforme en verre (3) dans la souffleuse ;
le cueillage d'une seconde paraison (37) au moyen d'un second poinçon (12) dans la zone de réception des paraisons ;
le transport de la seconde paraison (37) vers une seconde zone de pressage des préformes au moyen du second poinçon (12) ;
le façonnage d'une seconde préforme en verre (3) dans la seconde zone de pressage des préformes par l'interaction du second poinçon (12) avec une seconde matrice (12'), dans lequel la seconde préforme en verre (3) est recueillie par la seconde matrice (12') ;
le mouvement de retour du second poinçon (12) de la seconde zone de pressage des préformes vers la zone de réception des paraisons, après que la seconde préforme en verre (3) a été recueillie par la seconde matrice (12') ;
le transport de la seconde préforme en verre (3) de la seconde zone de pressage des préformes vers une zone d'application des préformes au moyen de la seconde matrice (11') et la dépose de la seconde préforme en verre (3) dans la souffleuse ;
dans lequel le premier poinçon (11), le second poinçon (12), la première matrice (11') et la seconde matrice (12') sont respectivement disposés de manière à pouvoir pivoter autour d'un axe vertical commun ; et
dans lequel le mouvement du premier poinçon (11) se fait de la zone de réception des paraisons vers la première zone de pressage des préformes et le mouvement du second poinçon (12) de la zone de réception des paraisons vers la seconde zone de pressage des préformes dans des sens de rotation opposés.
